# EUROPÄISCHE PATENTSCHRIFT

(11) **EP 4 533 407 B1**
(45) Veröffentlichungstag und Bekanntmachung des Hinweises auf die Patenterteilung: **11.02.2026**
(21) Anmeldenummer: 23726043.5
(22) Anmeldetag: 10.05.2023
(51) Int. Cl.: G06T 3/4038

(54) **VERFAHREN ZUR ERZEUGUNG EINES ZUSAMMENGESETZTEN KREISBILDES ODER KREISRINGBILDES**
METHOD FOR GENERATING A COMPOSITE CIRCULAR IMAGE OR CIRCULAR RING IMAGE
PROCÉDÉ DE GÉNÉRATION D'UNE IMAGE CIRCULAIRE COMPOSITE OU D'UNE IMAGE ANNULAIRE CIRCULAIRE

(30) Priorität: 29.05.2022 DE 102022113479
(43) Veröffentlichungstag der Anmeldung: 09.04.2025
(73) Patentinhaber: Orglmeister, Albert, 65207 Wiesbaden (DE)
(72) Erfinder: Orglmeister, Albert, 65207 Wiesbaden (DE)
(74) Vertreter: Müller, Jochen
(86) Internationale Anmeldenummer: PCT/EP2023/062395
(87) Internationale Veröffentlichungsnummer: WO 2023/232414

(56) Entgegenhaltungen:
- EP-A1- 3 013 044
- WO-A1-97/25628
- US-A1- 2013 021 433

## Beschreibung

Die Erfindung bezieht sich auf ein Verfahren zur Erzeugung eines zusammengesetzten Kreisbildes oder Kreisringbildes auf einem Bildschirm mit Bilddaten einer sich drehenden Kamera und Löschsystem dazu.

Um einen großen Raum thermografisch aus seiner Mitte heraus zu überwachen wäre ein Fischaugenobjektiv mit einem Bildwinkel von mindestens 180° für eine Infrarotkamera von Vorteil. Ein solches Objektiv ist jedoch im Zusammenhang mit einer Infrarotkamera zur Aufnahme von Thermographiebildern nicht verwendbar, da es starke Verzerrungen im Randbereich des Bildes erzeugt, die zu Messfehlern in der Temperatur führen.

Bei einem solchen mit einer Kamera zu überwachenden Raum im Sinne der Erfindung kann es sich beispielsweise um eine Lagerstätte oder Produktionsstätte oder dergleichen sowohl im Freien als auch in Hallen handeln. Zur Branderkennung bzw. Brandfrüherkennung umfassen solche Räume überwiegend selbsttätige Löschsysteme mit mindestens einer Kamera, die in der Regel oberseitig, beispielsweise an einer Raumdecke oder an einem Mast oder dergleichen, angeordnet ist, und über die zu überwachende Fläche verschwenkt wird. Wird ein Brandherd, ein Glutnest oder ein Bereich mit einer für das zu überwachende Gut ungewöhnlich hohen Temperatur, die auf einen Entstehungsbrand möglicherweise auch in einem tieferen Bereich unterhalb der thermografisch überwachbaren Oberfläche hinweist, dieser Ort höherer Temperatur, im Folgenden auch als Hot-Spot bezeichnet, detektiert, richtet die Steuerung einen Löschmittelwerfer auf diesen Brandherd und öffnet ein Ventil, damit das Löschmittel unter einem verhältnismäßig hohen Druck und in einer relativ großen Menge ausströmt. Aufgrund von Ungenauigkeiten in der Erfassung des Brandherdes und bei der Zielausrichtung des Löschmittelwerfers wird der Löschmittelwerfer häufig vertikal und/oder horizontal verschwenkt, um den Brandherd zu löschen.

Die EP 3 013 044 A1 offenbart ein Überwachungssystem mit PTZ-Kameras. Ein kreisförmiges Panoramabild der Umgebung jeder Kamera wird aus mehreren Bildern der Kameras erzeugt. Im Weiteren ist offenbart, wie überlappende Panoramabilder kombiniert werden können.

Aus der US 2013/0 021 433 A1 ist ein Verfahren zur Anzeige von Bildern einer bewegbaren Überwachungskamera auf einem Monitor bekannt. Weiterhin offenbart die WO 97/25 628 A1 ein Kamerasystem zur optischen Überwachung großer Flächen. Schließlich beschreibt die DE 20 2010 000 060 U1 ein Löschsystem zum Bekämpfen von Brandherden umfassend eine Infrarotkamera.

Der Erfindung liegt die Aufgabe zugrunde, ein Verfahren der Eingangs genannten Art zu schaffen, das eine fortlaufende informative Darstellung des überwachten Raums auf einem Bildschirm liefert
Erfindungsgemäß wird die Aufgabe durch die Merkmale des unabhängigen Anspruchs gelöst.

Die Unteransprüche stellen vorteilhafte Ausgestaltungen der Erfindung dar.

Bei einem Verfahren zur Erzeugung eines zusammengesetzten Kreisbildes oder Kreisringbildes auf einem Bildschirm mit Bilddaten einer sich drehenden Kamera mit einer bestimmten Ausrichtung zur Drehachse, werden die Bilddaten an einer Bildverarbeitungseinrichtung verarbeitet, wobei die Kamera ein rechteckiges Bild liefert, das längsseitig von einer Startzeile und einer Endzeile begrenzt ist, und das Bild wird derart verändert,
- dass die Startzeile bei einer Ausrichtung der Kamera, in der die Startzeile die Drehachse schneidet, einen Kreisbildmittelpunkt und die Endzeile einen Außenradius eines Kreissegmentbildes bildet, wobei mehrere Kreissegmentbilder zeitlich nacheinander zu einem Kreisbild zusammengesetzt werden oder
- dass die Startzeile bei einer Ausrichtung der Kamera, in der die Startzeile um einen positiven Winkel zu der Drehachse versetzt ist, einen Innenradius und die Endzeile einen Außenradius eines Kreissektorbildes bildet, wobei mehrere Kreissektorbilder zeitlich nacheinander zu einem Kreisringbild zusammengesetzt werden,
- wobei die Bildverarbeitungseinrichtung mindestens ein erzeugtes Kreisbild mit mindestens einem erzeugten Kreisringbild konzentrisch zueinander ausrichtet und nacheinander mittels der Kamers aufgenommene Bilder kombiniert auf dem Bildschirm darstellt.

Selbstverständlich kommen in Verbindung mit dem erfindungsgemäßen Verfahren digitale Kameras zum Einsatz die auch digitale Bilder, also Bilddaten zur Weiterverarbeitung und Analyse an die Bildverarbeitungseinrichtung des Computers senden. Bei dem Computer kann es sich sowohl um einen stationären Rechner als auch um einen virtuellen Rechner oder einen sogenannten Tabletcomputer oder ein Laptop oder dergleichen handeln.

Das Kreisbild oder Kreisringbild kann einen beliebigen Winkel umfassen und für den Fachmann ersichtlich beliebig kleiner als 360° bemessen sein. Insbesondere können die Kreisbilder oder Kreisringbilder an ein zu überwachendes Objekt angepasst werden, beispielsweise einen Eckbereich eines Gebäudes oder Lagerplatzes. Dann kann beispielsweise die Kamera um einen Winkel von kleiner 360° oszillieren und es wird ein entsprechendes Kreisbild oder Kreisringbild zusammengesetzt und zur Darstellung gebracht.

Bei der im Rahmen der Erfindung verwendeten Kamera kann es sich um eine Infrarot-Kamera (IR-Kamera) oder eine Videokamera handeln, deren Bilder bezüglich Merkmalen, die auf Rauch oder einen Brand schließen lassen, an der Bildverarbeitungseinrichtung analysiert werden.

Das erzeugte Kreisbild oder Kreisringbild ist relativ übersichtlich und lässt eine Beobachtung eines relativ großen Raums ohne die objektivbedingten Verzerrungen zu, wobei übliche Verzerrungen um so stärker auftreten, je breiter das Bild ist.

Um bei einem relativ großen mit der Kamera zu überwachenden Raum sowohl im Zentrum, also unterhalb der Drehachse der Kamera als auch weiter entfernt detaillierte und aussagekräftige Darstellungen zu erhalten, kombiniert die Bildverarbeitungseinrichtung mindestens ein erzeugtes Kreisbild mit mindestens einem erzeugten Kreisringbild, die konzentrisch zueinander ausgerichtet und nacheinander mittels der Kamera aufgenommen sind. Selbstverständlich ist aufgrund des gegebenenfalls erforderlichen Verschwenkens der Kamera das Kreisbild eine zeitversetzte Darstellung zu dem mindestens einen Kreisringbild, das sich mit seinem Innendurchmesser an den Außendurchmesser des Kreisbildes quasi nahtlos anschließen kann. Selbstverständlich können gleichermaßen mehrere Kreisringbilder miteinander kombiniert werden.

Selbstverständlich können auch hier Kreisbilder und Kreisringbilder erzeugt und zur Darstellung gebracht werden, die kleiner als 360° bemessen sind, wobei die Größe mit der Drehung der Kamera oder bei der Bilderzeugung bestimmbar ist, insbesondere um beispielsweise eine Ecke eines Gebäudes oder einen Sektor, der nicht beobachtet werden soll, auszuschließen.

Um unerwünschte Verzerrungen des auf dem Bildschirm sich ständig erneuernden Bildes, das in Echtzeit zur Anzeige gebracht werden kann, zu vermeiden, wird nach einer Weiterbildung ein sich von der Startzeile zur Endzeile erstreckender Mittelabschnitt des rechteckigen Bildes zur Verarbeitung zu dem Kreissegmentbild oder dem Kreissektorbild von der Bildverarbeitungseinrichtung ausgewählt und verarbeitet. Hierbei kann ein Teilabschnitt des Bildes mit einer Breite von z.B. 40 Wärmepixeln relativ genau aus der Bildmitte entnommen werden, da hier die geringsten Bildverzerrungen vorliegen. Zur Verarbeitung und Analyse wird ein relativ schmaler Streifen aus dem Bild ausgewählt, da sich mit einer zunehmenden Breite des Bildes, eine zunehmende Auswirkung des Fischaugeneffektes auf der Bild-Aufnahme auswirkt und Bilder nicht mehr verzerrungsfrei aneinanderzufügen sind. Sonach werden in dem Verfahren nicht die einzelnen Bilder insbesondere IR-Thermobilder nacheinander aneinandergereiht, sondern es werden kleine Teilabschnitte des IR-Thermobildes während der Drehung der Kamera mit deren Position erfasst und aneinandergereiht.

In Ausgestaltung bildet das Höhenmaß des Bildes einen Radius der Kreissegmentbilder oder eine Breite des Kreissektorbildes. Das von der Kamera aufgenommene und ausgewertete rechteckige Bild wird in ein thermografisches Kreisbild oder Kreisringbild umgewandelt, wobei die untere Bildpunktreihe, die vorliegend als Startzeile bezeichnet wird, bei einem Kreisbild zu einem zentralen Bildpunkt und bei einem Kreisringbild zu einem kleinen Durchmesser des Kreisrings umgewandelt wird.

Zweckmäßigerweise wandelt die Bildverarbeitungseinrichtung das Bild in ein Thermographiebild um und wertet nach in einer Speichereinrichtung hinterlegten Wärmegrenzwerten aus. Es ist nicht erforderlich alle Details des Thermographiebildes permanent zur Anzeige zu bringen. Sehr übersichtlich ist die Darstellung bestimmter Hotspots, also Wärmepunkte, die eine Temperatur oberhalb von gespeicherten Grenztemperaturen aufweisen, auf einem einheitlichen Hintergrund, wobei eine Darstellung des einzelnen Kreissegmentbildes oder Kreissektorbildes in Echtzeit lediglich angedeutet ist und die detaillierte Darstellung nach der Eingabe eines entsprechenden Befehls an der Bildverarbeitungseinrichtung erfolgt. Tippt beispielsweise Bedienpersonal auf einem Touchscreen an die Stelle eines dargestellten Hotspots, dann erfolgt die Anzeige des detaillieren Bildes und es ist erkennbar, wodurch der Hotspot zustande kommt. Grenztemperaturen können beispielsweise für Voralarme und/oder Alarme, die unterschiedlich darstellbar sind, hinterlegt sein.

Vorzugsweise errechnet die Bildverarbeitungseinrichtung bei der Umwandlung des Bildes in das Thermographiebild Polarkoordinaten von Wärmepixeln. Die Polarkoordinaten können beispielsweise zur Ansteuerung eines Löschmittelwerfers verwendet werden. Die Polarkoordinaten sind in einfacher Weise zu ermitteln, wenn die Position der Kamera im überwachten Raum und deren Drehstellung für die entsprechende Datenverarbeitung an einer die Bildverarbeitungseinrichtung umfassenden Computersteuerung anliegen. Bezüglich der Drehstellung der entweder umlaufend oder oszillierend drehenden Kamera können Daten eines Schrittmotors oder eines Positionssensors zur Auswertung herangezogen werden.

Das Verfahren findet beispielsweise Anwendung in einem Löschsystem mit
- mindestens einem Löschmittelwerfer, der mittels mindestens eines Motors um eine Befestigungsachse drehbar und um eine Schwenkachse schwenkbar und zur Versorgung mit Löschmittel an eine Löschmittelleitung angeschlossen ist,
- mindestens einer Kamera, die mittels mindestens eines Motors mindestens um eine Befestigungsachse drehbar ist,
- einer elektronischen Steuerung, die mindestens eine Speichereinrichtung, in der zumindest geometrische Grunddaten der relevanten Fläche und/oder Daten des Löschmittelwerfers auslesbar gespeichert sind, und einen Rechnerbaustein zur Datenverarbeitung sowie eine nach dem zuvor erläuterten Verfahren arbeitende Bildverarbeitungseinrichtung umfasst,
- einer an die Steuerung angeschlossenen Eingabeeinrichtung zur Dateneingabe und/oder zur Ansteuerung des Löschmittelwerfers und der Kamera und
- einem an die Steuerung angeschlossenen Bildschirm zur Darstellung von durch die Bildverarbeitungseinrichtung aufbereiteten Bildern der Kamera.

Auf dem Bildschirm wird das von der Bildverarbeitungseinrichtung zu einem Kreisbild oder einem Kreisringbild oder eine Kombination des Kreisbildes mit mindestens einem konzentrisch dazu ausgerichteten Kreisringbild angezeigt und im Fall einer thermischen Auswertung werden gegebenenfalls Flächen einer Temperatur, die gespeicherte Grenzwerte übersteigt als Voralarm oder Alarm angezeigt. Eine Alarmierung deutet auf einen Brand hin und der Löschmittelwerfer kann anhand der an der Steuerung anliegenden Daten derart positioniert werden, dass austretendes Löschmittel auf die Stelle des Brandes trifft. Die Genauigkeit wird erhöht, wenn der Kamera und/oder dem Löschmittelwerfer ein mit der Steuerung verbundener Laser, der eine Abstandmessung vornehmen kann, zugeordnet ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von Ausführungsbeispielen unter Bezugnahme auf die zugehörige Zeichnung näher erläutert.

Es zeigt:

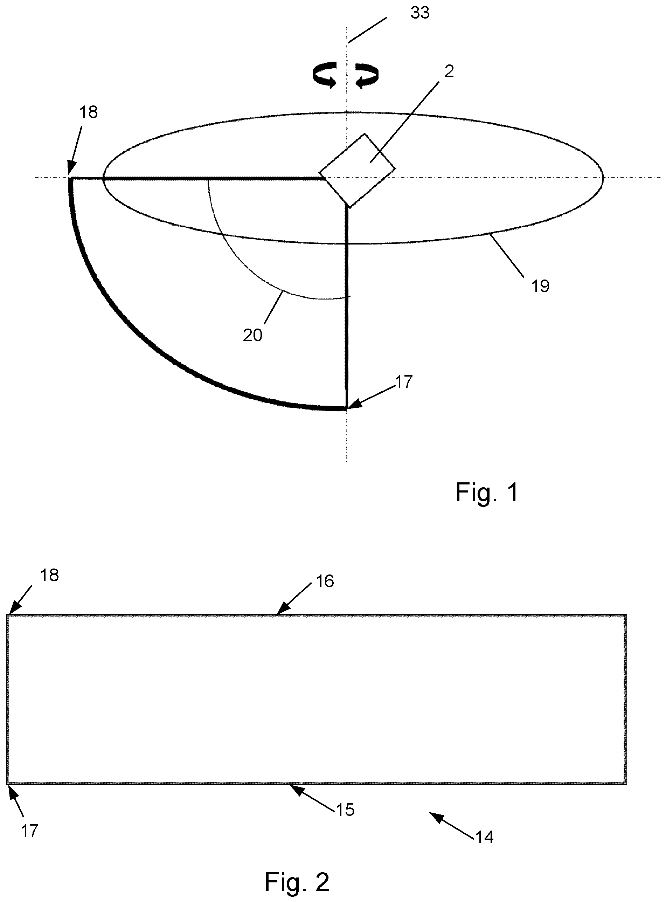

- Fig. 1: eine schematische Darstellung einer Anordnung zur Durchführung des Verfahrens nach der Erfindung,
- Fig. 2: eine schematische Darstellung eines zusammengesetzten Kamerabildes,

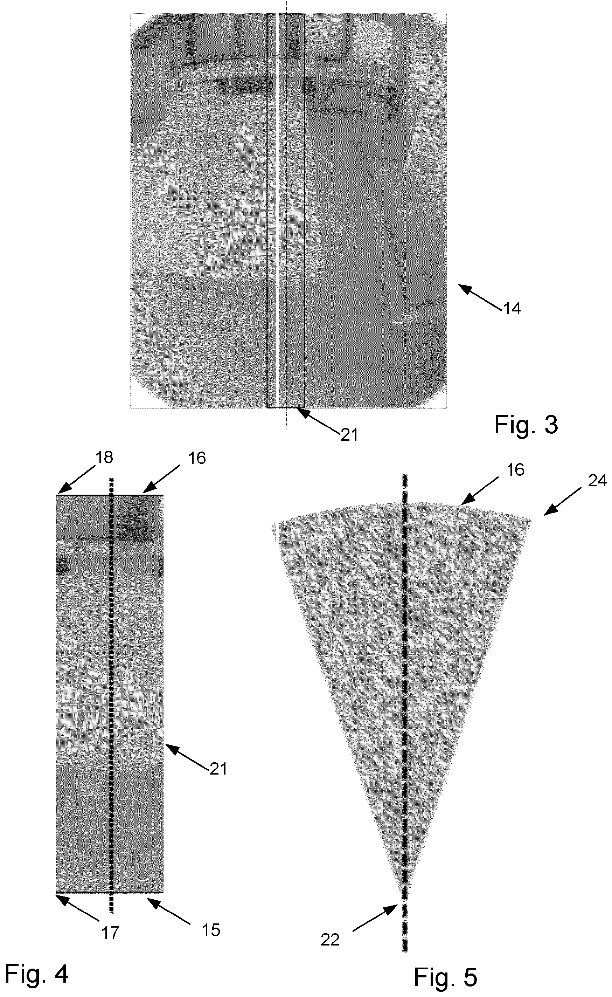

- Fig. 3: eine Darstellung eines Kamerabildes,
- Fig. 4: eine Teil-Darstellung eines Kamerabildausschnittes nach Fig. 3,
- Fig. 5: eine schematische Darstellung des transformierten Kamerabildausschnittes nach Fig. 4,

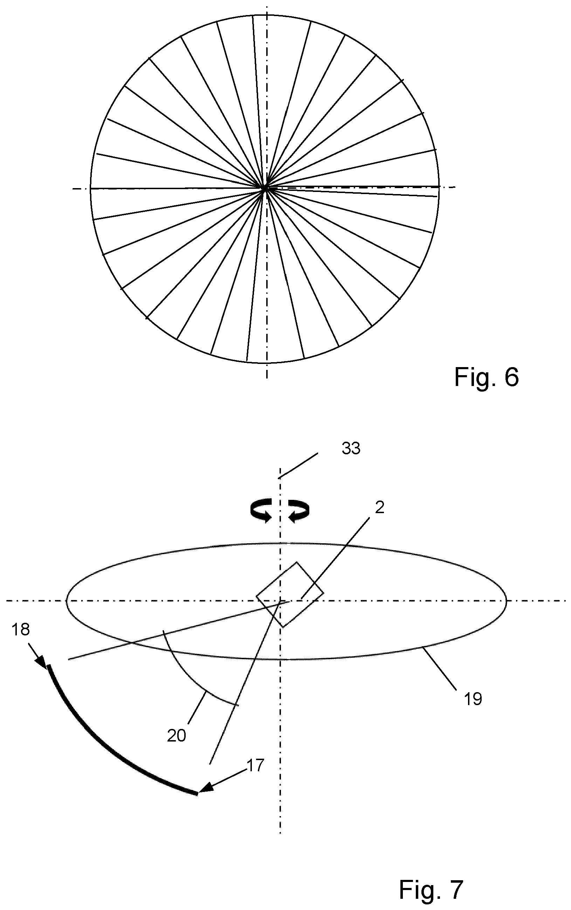

- Fig. 6: eine schematische Darstellung eines erzeugten Kreisbildes,
- Fig. 7: eine zweite schematische Darstellung der Anordnung nach Fig. 1,

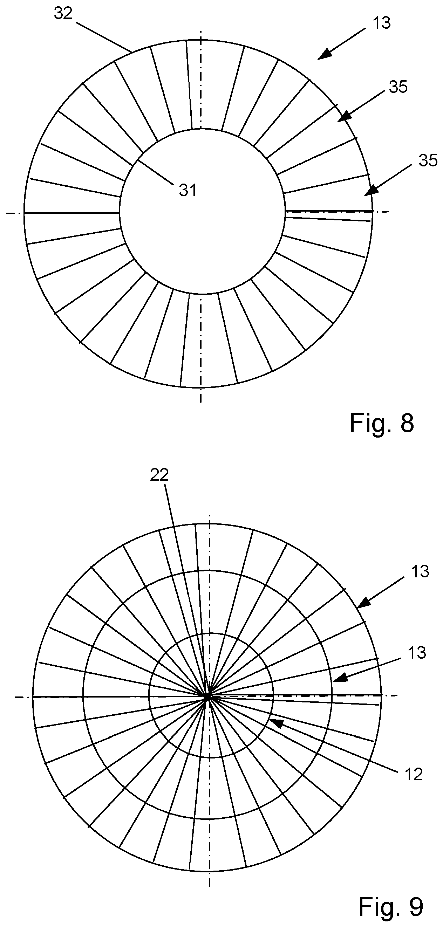

- Fig. 8: eine schematische Darstellung eines erzeugten Kreisringbildes,
- Fig. 9: eine schematische Darstellung eines aus mehreren Kreisringbildern und einem Kreisbild zusammengesetzten Kreisbildes,

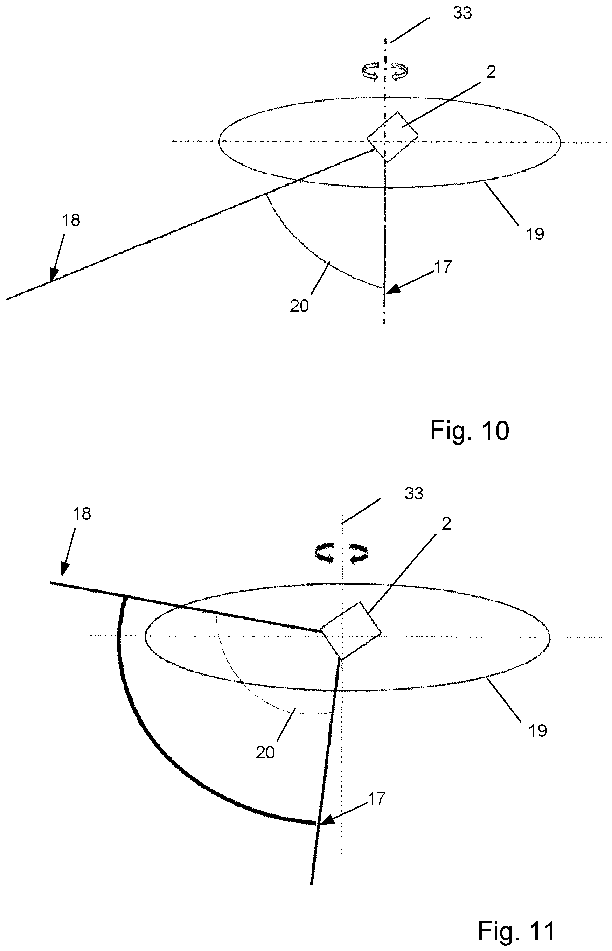

- Fig. 10: eine dritte schematische Darstellung der Anordnung nach Fig. 1,
- Fig. 11: eine vierte schematische Darstellung der Anordnung nach Fig. 1,

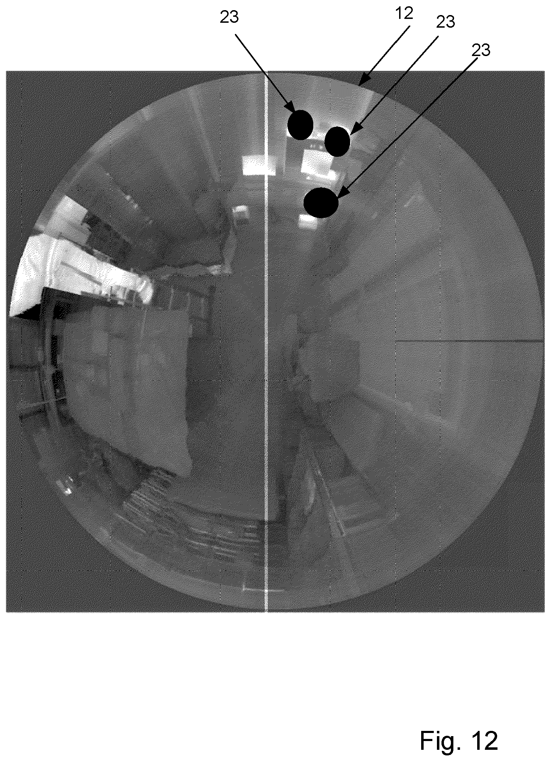

- Fig. 12: eine Darstellung eines Thermo-Kreisbildes und

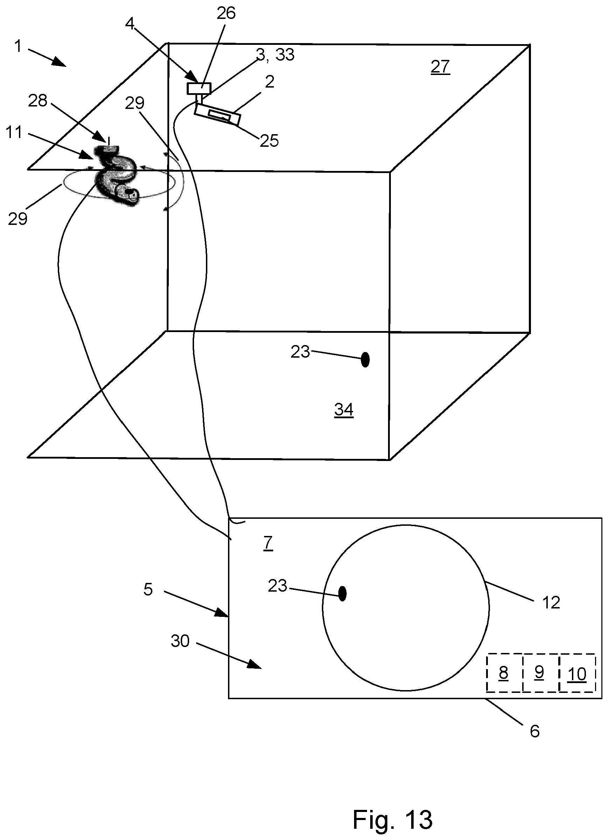

- Fig. 13: eine schematische Darstellung eines zu überwachenden Raums mit einem Löschsystem nach der Erfindung.

An einer Decke 27 eines zu überwachenden Raums 1 oder einem Mast oder Träger oder dergleichen ist eine digitale Kamera 2 installiert, die als eine Videokamera oder Infrarotkamera ausgebildet ist. Selbstverständlich kann es sich bei dem Raum 1 auch um ein Lager im Freien oder eine sonstige beliebige Fläche, beispielsweise auch eine Waldfläche oder dergleichen handeln. Die Kamera 2 ist an einer Befestigungsachse 3 um dieselbe drehbar montiert. Sonach stellt die Befestigungsachse 3 eine Drehachse 33 dar. Die Kamera 2 kann mittels eines zugeordneten Motors 4 eine Drehung von bis zu 360° ausführen, beispielsweise oszillierend. Die Kamera 2 besitzt beispielsweise eine Bildauflösung von 640 x 480 Pixel bei einem Öffnungswinkel von 90°x67,5°. Es ist für den Fachmann ersichtlich, dass auch Kameras 2 mit geänderten Auflösungen und/oder Öffnungswinkeln zum Einsatz kommen können.

Die Kamera 2 und der der Kamera 2 zugeordnete Motor 4 sind mit einer elektronischen Steuerung 5 gekoppelt, die vorliegend als ein Tabletcomputer 6 mit einem als Touchscreen ausgeführten Bildschirm 7 ausgebildet ist, wobei selbstverständlich die Steuerung 5 auch einen stationären oder virtuellen Computer umfassen kann. An der Steuerung 5 sind mindestens eine Speichereinrichtung 8 zur auslesbaren Speicherung von Daten, ein Rechnerbaustein 9 und eine Bildverarbeitungseinrichtung 10 zur Datenverarbeitung verbaut.

In der Speichereinrichtung 8 der elektronischen Steuerung 5 sind die geometrischen Grunddaten des Raums 1 hinterlegt, die vor Ort als Ist-Daten gemessen werden. Diese geometrischen Grunddaten des Raums 1 beschreiben die Grundfläche, also die Abmessungen des Bodens 34 und die Höhe des Raums 1. Im Weiteren sind die Koordinaten, an denen die Drehachse 33 der Kamera 2 und ein Löschmittelwerfer 11 befestigt sind, gespeichert. Darüber hinaus können herstellerseitig ermittelte Standardwerferkurfen, die Wurfweiten des Löschmittels unter einem bestimmten Druck und vorgegebener Löschmittelwerfereinstellungen beschreiben, sowie verschiedene Software gespeichert werden.

Die Software und die Bildverarbeitungseinrichtung 10 eine Erkennung eines Hotspots 23, also einer warmen Stelle mit einer Ist-Temperatur oberhalb einer Grenztemperatur, die für einen Voralarm und/oder einen Alarm im Fall eines Brands gespeichert sind, sicher.

Zur Erzeugung einer leicht für einen Beobachter bzw. Bedienpersonal erfassbaren Darstellung des überwachten Raums 1 auf dem Bildschirm 7 wird ein Kreisbild 12 oder ein Kreisringbild 13 oder ein aus mindestens einem Kreisbild 12 und/oder mindestens einem Kreisringbild 13 bestehendes Kreisbild 12 von der Bildverarbeitungseinrichtung 10 erzeugt, bei dem insbesondere die Nachteile eines rechteckigen Bildes, das die Kamera 2 beispielsweise mit einem Fischaugeobjektiv liefert, vermieden sind.

Das rechteckige Bild der Kamera 2 hat bei dem vorliegend gegebenen Öffnungswinkel 20 von 90°x67,5° die Bildauflösung von 640 x 480 Pixel und beginnt unterseitig mit einer Startzeile 15 und endet oberseitig mit der Endzeile 16. Die Kamera 2 ist derart an der Befestigungsachse 3 bzw. der Drehachse 33 montiert, dass sie bei dem Öffnungswinkel 20 von 90° um 45° zu der Befestigungsachse 3 verschwenkt ist, so dass die Startzeile 15 mit der Befestigungsachse 3 fluchtet bzw. diese in ihrer Verlängerung schneidet und ein Starteckpixel 17 annähernd stillsteht. Ein Endeckpixel 18 der Endzeile 16 beschreibt bei der Drehung der Kamera 2 eine Kreisbahn 19.

Ordnet man der 360° Kreisbahn 19 die volle Auflösung der Kamera 2 zu, ergibt sich: 360° Umfang / 67,5° Öffnungswinkel = 5,33 aneinandergesetzte Kamerabilder

### Somit gilt:

5,33 x 480 Wärmepixel pro 67,5° Öffnungswinkel ergibt eine Kreisauflösung von ca. 2.558 Wärmepixel für 360° Auflösung.

Bei einer Drehung von 360° wird ein unterseitig durch die Startzeile 15 und oberseitig durch die Endzeile 16 begrenztes thermografisches Rechteck-Bild 14 erstellt, das eine Höhe von 640 Wärmepixel hat und eine Länge von 2.558 Wärmepixel aufweist, wobei des Starteckpixel 17 bei der oben beschriebenen Anordnung quasi immer auf den gleichen Ortspunkt unterhalb der Befestigungsachse 3, die als Drehachse dient, zeigt. Um dieses Rechteck-Bild 14 visuell interpretieren zu können, werden kleine Teilabschnitte des IR-Thermo-Bildes 14 während der Drehung der Kamera 2 mit deren Position erfasst und aneinandergereiht. Die Breite dieser Teilabschnitte variiert. Das hängt von der Verarbeitungsgeschwindigkeit des Rechnerbausteins 9 der Steuerung 5 ab, in dem diese Teilabschnitte aneinandergefügt werden und der Drehgeschwindigkeit des Motors 4. Je schmaler die Teilabschnitte bemessen sind, desto verzerrungsfreier wird das Gesamtbild, aber desto mehr Rechenleistung benötigt das System.

Zur Nachbildung eines Weitwinkelobjektivs von ca. 180° einer IR-Kamera 2 wird ein Mittelabschnitt 21 des Bildes14 als Teilabschnitt mit einer Breite von z.B. 40 Wärmepixel möglichst genau aus der Bildmitte entnommen, da in der Bildmitte die wenigsten Bildverzerrungen vorliegen, denn je breiter das Bild 14 ist, desto mehr wirkt sich der Fischaugeneffekt einer Aufnahme aus und man kann die Teilbilder nicht mehr verzerrungsfrei aneinanderfügen.

Der Mittelabschnitt 21 des Bildes14 stellt nun quasi das Bild 14 dar, das bei der oben beschriebenen Anordnung in ein thermografisches Kreisbild 12 umgeformt werden muss, sodass die untere Startzeile 15 zu einem zentralen Kreisbildmittelpunkt 22 umgerechnet wird, wobei die Höhe des Mittelabschnitts 21 des Thermo-Bildes 14 dem Radius eines Kreissegmentbildes 24 entspricht. Jede Zeile des Mittelabschnittes 21 muss in eine Kreissegmentzeile umgerechnet werden. Je näher man an den Kreisbildmittelpunkt 22 kommt, desto weniger Wärmepixel passen in die jeweilige Zeile des Kreissegmentbildes 24. Daher müssen Wärmepixelgruppen gebildet werden, die aus mehreren nebeneinander liegenden Wärmepixeln bestehen. Je näher man an das Zentrum also den Kreisbildmittelpunkt 22 des Kreisbildes 12 kommt, desto mehr Wärmepixel umfasst eine Wärmepixelgruppe.

Eine Mittelwertbildung der einzelnen Wärmepixel einer Wärmepixelgruppe führt zu einer Glättung der Maximaltemperaturen. Daher wird bei der Zusammenfassung einer Wärmepixelgruppe zu einem neuen Wärmepixel immer der Temperatur-Wert des heißesten Wärmepixels der Gruppe verwendet. Die Nutzung des Maximalwertes bei der Zusammenfassung einer Wärmepixelgruppe ist gerade dann von Vorteil, wenn das oben beschriebene Prinzip zur Brandüberwachung und Darstellung eines Brandherdes also eines Hotspots 23 eingesetzt wird.

Gleichzeitig werden auch die Polar-Koordinaten der Wärmepixel errechnet, um bei einem Brandalarm unmittelbar einen Löschmittelwerfer 11 auf den Brandherd, den Hotspot 23, positionieren zu können. Bei der Errechnung der Polar-Koordinaten können an der Steuerung 5 anliegende Daten eines an der Befestigungsachse 3 vorhandenen Positionsgebers 26 ermittelt und verarbeitet werden. Die Ausrichtung des Löschmittelwerfers 11 kann zur Berücksichtigung der Wurfparabel des ausgebrachten Löschmittels durch einen der Kamera 2 zugeordneten Laser 24, der zu einer Abstandsmessung ausgelegt und mit der Steuerung 5 verbunden ist, vereinfacht werden.

Zur Darstellung eines Kreisbildes 12 auf dem Bildschirm 7 werden mehrere Kreissegmentbilder 24 aneinandergereiht und mitfortlaufender Drehung der Kamera 2 auch überschrieben.

Wird eine Kamera 2 mit einem kleineren Öffnungswinkel 20 als 90° beispielsweise zur Überwachung eines Teilbereichs des Raums 1 gewählt, dann befindet sich das Starteckpixel 17 nicht in einer Flucht mit der Befestigungsachse 3 und beschreibt eine Kreisbahn, die konzentrisch zur Kreisbahn 19 des Endeckpixels 18 ausgerichtet ist.

Auch hier wird aus dem Bild 4 ein Mittelabschnitt 21 extrahiert, der in ein thermografisches Kreisringbild 13 umgeformt wird, sodass die untere Startzeile 15 zu einem inneren Durchmesser 31 und die obere Endzeile 16 zu einem äußeren Durchmesser 32 eines Kreissektorbildes 35 umgerechnet wird, wobei die Höhe des Mittelabschnitts 21 des Thermo-Bildes 14 der Differenz zwischen dem äußeren Durchmesser 32 und dem inneren Durchmesser 31 des Kreissektorbildes 35 entspricht. Die mit der Drehung der Kamera 2 entstehenden Kreissektorbilder 35 werden fortlaufend zu dem Kreisringbild 13 zusammengesetzt.

Selbstverständlich lassen sich insbesondere auch in Abhängigkeit des Drehwinkels der Kamera 2 oder gesteuert durch die Bildverarbeitungseinrichtung 10 Kreisbilder 12 und/oder Kreisringbilder 13 bzw. entsprechende Kombinationen mit einem beliebigen Winkel kleiner als 360° erzeugen und darstellen.

Zur Veränderung des zu überwachenden Durchmessers bzw. der Fläche im Raum 1 wird eine Kamera 2 mit einem kleineren Öffnungswinkel 20 als 90° gewählt und derart ausgerichtet, dass sich das Starteckpixel 17 in einer Flucht mit der Befestigungsachse 3 befindet und das Endeckpixel 18 eine Kreisbahn beschreibt, die konzentrisch zur Kreisbahn 19 ausgerichtet ist und einen dazu verschiedenen Durchmesser aufweist. Hierbei wird wie bereits beschrieben ein Kreisbild 12 erzeugt und zur Darstellung gebracht.

Soll ein Bereich oberhalb der Anbringung der Kamera 2 im Raum 1 beispielsweise eine Decke 27 überwacht werden, dann kann eine Kamera 2 mit einem Öffnungswinkel 20 von 90° gewählt und derart ausgerichtet werden, dass sich das Starteckpixel 17 nicht in einer Flucht mit der Befestigungsachse 3 befindet und das Endeckpixel 18 eine Kreisbahn beschreibt, die konzentrisch zur Kreisbahn 19 ausgerichtet ist und einen demgegenüber veränderten Durchmesser aufweist. Hierbei wird wie bereits beschrieben ein Kreisringbild 12 erzeugt und zur Darstellung gebracht.

Es ist für den Fachmann ersichtlich, dass mit der Kamera 2 durch deren Verschwenkung relativ zu der Befestigungsachse 3 nacheinander beispielsweise ein Kreisbild 12 und mehrere Kreisringbilder 13 oder mehrere Kreisringbilder 13 ohne ein zentrales Kreisbild 12 mit unterschiedlichen Durchmessern erzeugt und in einer gemeinsamen Darstellung konzentrisch zueinander ausgerichtet werden können, um einen relativ großen Raum 1 sowohl zentral als auch in peripheren Randbereichen erfassen zu können.

Bei dem zu überwachenden Raum 1 handelt es sich beispielsweise um einen Lagerraum für brennbares Material, wie zum Beispiel Reifen, Müll, aber auch Kraftfahrzeuge, Kunststoffe oder dergleichen. Der Raum 1 kann durch die Abmessungen seiner Grundfläche und seine Höhe in bekannter Weise definiert sein.

Um den Raum 1 auf das Auftreten eines Brandes zu überwachen und gegebenenfalls ein selbsttätiges Löschen des Brandes zu starten, ist das Löschsystem installiert, das im Wesentlichen die als Wärmebildkamera ausgebildete Kamera 2 sowie den Löschmittelwerfer 11, der auch als Löschmonitor oder Löschwerfer benannt werden kann, umfasst. Die Kamera 2 und der Löschmittelwerfer 11 sind an bestimmten Positionen der Decke 27 des Raums 1 derart befestigt, dass die Befestigungsachse 3 der Kamera 2 parallel zu einer Befestigungsachse 28 des Löschmittelwerfers 11 ausgerichtet ist.

Der Löschmittelwerfer 11 ist um zwei Achsen schwenkbar, wie durch die dem der Löschmittelwerfer 11 zugeordneten Pfeile 29 angedeutet, nämlich um seine Befestigungsachse 28 sowie eine winkelversetzt dazu ausgerichtete Achse. Der Löschmittelwerfer 11 ist an Rohrleitungen oder Schlauchleitungen für das Löschmittel angeschlossen. Im Weiteren ist der Löschmittelwerfer 11 mit der elektronischen Steuerung 5 gekoppelt, die bei einer Ausgestaltung als Tabletcomputer 6 mit einem Touchscreen 30 sowohl als Eingabeeinheit als auch zur Darstellung der erzeugten Kreisbilder 12 und Kreisringbilder 13 dient.

Wird auf dem Touchscreen 30 innerhalb des Kreisbildes 12 oder Kreisringbildes 13 ein Hotspot 23 dargestellt, dann kann durch einfaches Antippen des Hotspots 23 auf dem Touchscreen 30 der Bildausschnitt mit dem Hotspot 23 dargestellt und ein Löschmittelwerfer 11 ausgerichtet werden. Alternativ zu der Steuerung mittels Touchscreen 30 kann auch ein Joystick als eine Eingabeeinrichtung an einem Computer mit zugeordnetem Bildschirm vorgesehen sein

Die von der Kamera 2 erfasste Position des Brandherdes lässt sich anhand der an der Bildverarbeitungseinrichtung 10 ermittelten Polarkoordinaten und gegebenenfalls den mit dem Laser 25 ermittelten Abstandsdaten mit einem relativ geringen Rechenaufwand beschreiben und der Löschmittelwerfer 11 verhältnismäßig exakt nachführen, da insbesondere die beiderseitigen Befestigungsachsen 3, 28 parallel zueinander ausgerichtet sind, so dass sich Abweichungen bzw. Fehler von einer geringeren Bedeutung durch die unterschiedlichen Befestigungspunkte ergeben. Der Fehler ist aber in der Regel derart klein, dass der Brand an diesem Punkt mit dem Löschmittel auch zum Löschen zu treffen, ist.

### Bezugszeichen

| | | | |
|---|---|---|---|
| 1. | Raum | 19. | Kreisbahn |
| 2. | Kamera | 20. | Öffnungswinkel |
| 3. | Befestigungsachse von 2 | 21. | Mittelabschnitt |
| 4. | Motor | 22. | Kreisbildmittelpunkt |
| 5. | Steuerung | 23. | Hotspot |
| 6. | Tabletcomputer | 24. | Kreissegmentbildes |
| 7. | Bildschirm | 25. | Laser |
| 8. | Speichereinrichtung | 26. | Positionsgeber |
| 9. | Rechnerbaustein | 27. | Decke |
| 10. | Bildverarbeitungseinrichtung | 28. | Befestigungsachse von 11 |
| 11. | Löschmittelwerfer | 29. | Pfeile |
| 12. | Kreisbild | 30. | Touchscreen |
| 13. | Kreisringbild | 31. | innerer Durchmesser |
| 14. | Bild | 32. | äußerer Durchmesser |
| 15. | Startzeile | 33. | Drehachse |
| 16. | Endzeile | 34. | Boden |
| 17. | Starteckpixel | 35. | Kreissektorbild |
| 18. | Endeckpixel | | |

## Patentansprüche

1. Verfahren zur Erzeugung eines zusammengesetzten Kreisbildes (12) oder Kreisringbildes (13) auf einem Bildschirm (7) mit Bilddaten einer sich drehenden Kamera (2) mit einer bestimmten Ausrichtung zur Drehachse (33), die an einer Bildverarbeitungseinrichtung (10) verarbeitet werden, wobei die Kamera (2) ein rechteckiges Bild (14) liefert, das längsseitig von einer Startzeile (15) und einer Endzeile (16) begrenzt ist, und das Bild (14) derart verändert wird,
- dass die Startzeile (15) bei einer Ausrichtung der Kamera (2), in der die Startzeile (15) die Drehachse (33) schneidet, einen Kreisbildmittelpunkt (22) und die Endzeile (16) einen Außenradius eines Kreissegmentbildes (24) bildet, wobei mehrere Kreissegmentbilder (24) zeitlich nacheinander zu einem Kreisbild (12) zusammengesetzt werden oder
- dass die Startzeile (15) bei einer Ausrichtung der Kamera (2), in der die Startzeile (15) um einen positiven Winkel zu der Drehachse (33) versetzt ist, einen Innenradius und die Endzeile einen Außenradius eines Kreissektorbildes (35) bildet, wobei mehrere Kreissektorbilder (35) zeitlich nacheinander zu einem Kreisringbild (13) zusammengesetzt werden,
- wobei die Bildverarbeitungseinrichtung (10) mindestens ein erzeugtes Kreisbild (12) mit mindestens einem erzeugten Kreisringbild (13) konzentrisch zueinander ausrichtet und nacheinander mittels der Kamers (2) aufgenommene Bilder (14) kombiniert auf dem Bildschirm (7) darstellt.

2. Verfahren nach Anspruch 1, **dadurch gekennzeichnet, dass** ein sich von der Startzeile (15) zur Endzeile (16) erstreckender Mittelabschnitt (21) des rechteckigen Bildes (14) zur Verarbeitung zu dem Kreissegmentbild (24) oder dem Kreissektorbild (35) von der Bildverarbeitungseinrichtung (10) ausgewählt und verarbeitet wird.

3. Verfahren nach Anspruch 1 oder 2, **dadurch gekennzeichnet, dass** das Höhenmaß des Bildes (14) einen Radius des Kreissegmentbildes (24) oder eine Breite des Kreissektorbildes (35) bildet.

4. Verfahren nach einem der Ansprüche 1 bis 3, **dadurch gekennzeichnet, dass** die Bildverarbeitungseinrichtung (10) das Bild (14) in ein Thermographiebild umwandelt und nach an einer Speichereinrichtung (8) hinterlegten Wärmegrenzwerten auswertet.

5. Verfahren nach einem der Ansprüche 1 bis 4, **dadurch gekennzeichnet, dass** die Bildverarbeitungseinrichtung (10) bei der Umwandlung des Bildes (14) in das Kreissegmentbild (24) oder das Kreissektorbild (35) Polarkoordinaten von Wärmepixeln errechnet.

6. Verfahren nach einem der Ansprüche 1 bis 5, **dadurch gekennzeichnet, dass** die Bildverarbeitungseinrichtung (10) mehrere erzeugte Kreisringbilder (13) konzentrisch zueinander ausgerichtet und nacheinander mittels der Kamera aufgenommen kombiniert auf dem Bildschirm (7) darstellt.

7. Verfahren nach einem der Ansprüche 1 bis 6, **dadurch gekennzeichnet, dass** die Kamera (2) eine Bildauflösung von 640 x 480 Pixel bei einem Öffnungswinkel (20) von 90°x67,5° aufweist.

8. Löschsystem mit
- mindestens einem Löschmittelwerfer (11), der mittels mindestens eines Motors um eine Befestigungsachse (28) drehbar und um eine Schwenkachse schwenkbar und zur Versorgung mit Löschmittel an eine Löschmittelleitung angeschlossen ist,
- mindestens einer Kamera (2), die mittels mindestens eines Motors (4) mindestens um eine Befestigungsachse (3) drehbar ist,
- einer elektronischen Steuerung (5), die mindestens eine Speichereinrichtung (8) in der zumindest geometrische Grunddaten der relevanten Fläche und/oder Daten des Löschmittelwerfers (11) auslesbar gespeichert sind, und einen Rechnerbaustein (9) zur Datenverarbeitung sowie eine nach dem Verfahren gemäß Anspruch 1 arbeitende Bildverarbeitungseinrichtung (10) umfasst,
- einer an die Steuerung (5) angeschlossenen Eingabeeinrichtung zur Dateneingabe und/oder zur Ansteuerung des Löschmittelwerfers (11) und der Kamera (2) und
- einem an die Steuerung (5) angeschlossenen Bildschirm (7) zur Darstellung von Kreisbildern (12) und/oder Kreisringbildern (13) der Bildverarbeitungseinrichtung (10).

## Claims

1. A method for generating a composite circular image (12) or circular ring image (13) on a screen (7) with image data from a rotating camera (2) with a specific alignment to the axis of rotation (33), which are processed on an image-processing device (10), wherein the camera (2) provides a rectangular image (14) which is bounded on the longitudinal side by a start line (15) and an end line (16), and the image (14) is changed in such a way
- that the start line (15) forms a circular image center point (22) and the end line (16) forms an outer radius of a circular segment image (24) when the camera (2) is aligned in such a way that the start line (15) intersects the axis of rotation (33), wherein a plurality of circular segment images (24) are temporally sequentially combined to produce a circular image (12), or
- that the start line (15) forms an inner radius and the end line forms an outer radius of a circular sector image (35) when the camera (2) is aligned in such a way that the start line (15) is offset by a positive angle to the axis of rotation (33), wherein a plurality of circular sector images (35) are temporally sequentially combined to produce a circular ring image (13),
- wherein the image-processing device (10) aligns at least one generated circular image (12) with at least one generated circular ring image (13) concentrically to one another and displays images (14), captured successively by means of the camera (2), in combined fashion on the screen (7).

2. The method according to claim 1, **characterized in that** a center portion (21) of the rectangular image (14) extending from the start line (15) to the end line (16) is selected and processed by the image-processing device (10) for processing to produce the circular segment image (24) or the circular sector image (35).

3. The method according to claim 1 or 2, **characterized in that** the height dimension of the image (14) forms a radius of the circular segment image (24) or a width of the circular sector image (35).

4. The method according to any one of claims 1 to 3, **characterized in that** the image-processing device (10) converts the image (14) into a thermographic image and evaluates it according to thermal limit values stored on a storage device (8).

5. The method according to any one of claims 1 to 4, **characterized in that** the image-processing device (10) calculates polar coordinates of thermal pixels when converting the image (14) into the circular segment image (24) or the circular sector image (35).

6. The method according to any one of claims 1 to 5, **characterized in that** the image-processing device (10) displays a plurality of generated circular ring images (13), concentrically aligned with one another and captured successively by means of the camera, in combined fashion on the screen (7).

7. The method according to any one of claims 1 to 6, **characterized in that** the camera (2) has an image resolution of 640 x 480 pixels with an opening angle (20) of 90° x 67.5°.

8. An extinguishing system with
- at least one extinguishing agent sprayer (11) that is able to be rotated about a mounting axis (28) by means of at least one motor, is able to be pivoted about a pivot axis, and is connected to an extinguishing agent line in order to be supplied with extinguishing agent,
- at least one camera (2) that is able to be rotated at least about a mounting axis (3) by means of at least one motor (4),
- an electronic controller (5) that comprises at least one storage device (8) in which at least geometric basic data of the relevant area and/or data of the extinguishing agent sprayer (11) are stored so as to be capable of being read, and a computer module (9) for data processing, as well as an image-processing device (10) that operates according to the method according to claim 1,
- an input device, connected to the controller (5), for inputting data and/or for controlling the extinguishing agent sprayer (11) and the camera (2), and
- a screen (7) connected to the controller (5) for displaying circular images (12) and/or circular ring images (13) of the image-processing device (10).

## Revendications

1. Procédé pour la génération d'une image circulaire (12) composite ou d'une image annulaire circulaire (13) sur un écran (7) comportant des données d'image d'une caméra (2) rotative comportant une orientation déterminée par rapport à l'axe de rotation (33), lesquelles données d'image sont traitées au niveau d'un dispositif de traitement d'image (10), dans lequel la caméra (2) fournit une image (14) rectangulaire qui est délimitée longitudinalement par une ligne de début (15) et une ligne de fin (16), et l'image (14) est modifiée de telle sorte
- que la ligne de début (15) forme un point central d'image circulaire (22) et la ligne de fin (16) forme un rayon extérieur d'une image de segment circulaire (24) dans le cas d'une orientation de la caméra (2) dans laquelle la ligne de début (15) coupe l'axe de rotation (33), dans lequel plusieurs images de segment circulaire (24) sont assemblées successivement dans le temps pour former une image circulaire (12), ou
- que la ligne de début (15) forme un rayon intérieur et la ligne de fin forme un rayon extérieur d'une image de secteur circulaire (35) dans le cas d'une orientation de la caméra (2) dans laquelle la ligne de début (15) est décalée d'un angle positif par rapport à l'axe de rotation (33), dans lequel plusieurs images de secteur circulaire (35) sont assemblées successivement dans le temps pour former une image annulaire circulaire (13),
- dans lequel le dispositif de traitement d'image (10) aligne de manière concentrique l'une par rapport à l'autre au moins une image circulaire (12) générée avec au moins une image annulaire circulaire (13) générée et affiche des images (14) prises successivement au moyen de la caméra (2) de manière combinée sur l'écran (7).

2. Procédé selon la revendication 1, **caractérisé en ce qu'**une section centrale (21) de l'image (14) rectangulaire s'étendant de la ligne de début (15) à la ligne de fin (16) est sélectionnée et traitée par le dispositif de traitement d'image (10) pour le traitement en l'image de segment circulaire (24) ou en l'image de secteur circulaire (35).

3. Procédé selon la revendication 1 ou 2, **caractérisé en ce que** la mesure de hauteur de l'image (14) forme un rayon de l'image de segment circulaire (24) ou une largeur de l'image de secteur circulaire (35).

4. Procédé selon l'une des revendications 1 à 3, **caractérisé en ce que** le dispositif de traitement d'image (10) convertit l'image (14) en une image thermographique et l'évalue selon des valeurs limites de chaleur enregistrées au niveau d'un dispositif de stockage (8).

5. Procédé selon l'une des revendications 1 à 4, **caractérisé en ce que** le dispositif de traitement d'image (10) calcule des coordonnées polaires de pixels thermiques lors de la conversion de l'image (14) en l'image de segment circulaire (24) ou en l'image de secteur circulaire (35).

6. Procédé selon l'une des revendications 1 à 5, **caractérisé en ce que** le dispositif de traitement d'image (10) affiche de manière combinée sur l'écran (7) plusieurs images annulaires circulaires (13) générées, alignées concentriquement les unes par rapport aux autres et prises successivement au moyen de la caméra.

7. Procédé selon l'une des revendications 1 à 6, **caractérisé en ce que** la caméra (2) présente une résolution d'image de 640 x 480 pixels pour un angle d'ouverture (20) de 90° x 67,5°.

8. Système d'extinction comportant
- au moins un pulvérisateur d'agent d'extinction (11) qui peut tourner autour d'un axe de fixation (28) au moyen d'au moins un moteur et qui peut pivoter autour d'un axe de pivotement et qui est raccordé à une conduite d'agent d'extinction pour l'alimentation en agent d'extinction,
- au moins une caméra (2) qui peut tourner au moins autour d'un axe de fixation (3) au moyen d'au moins un moteur (4),
- un dispositif de commande (5) électronique qui comprend au moins un dispositif de stockage (8) dans lequel au moins des données de base géométriques de la surface pertinente et/ou des données du pulvérisateur d'agent d'extinction (11) sont stockées de manière à pouvoir être lues, et un module de calcul (9) pour le traitement de données ainsi qu'un dispositif de traitement d'image (10) fonctionnant conformément au procédé selon la revendication 1,
- un dispositif d'entrée connecté au dispositif de commande (5) pour l'entrée de données et/ou pour la commande du pulvérisateur d'agent d'extinction (11) et de la caméra (2), et
- un écran (7) connecté au dispositif de commande (5) pour l'affichage d'images circulaires (12) et/ou d'images annulaires circulaires (13) du dispositif de traitement d'image (10).
